# EUROPÄISCHE PATENTSCHRIFT

(11) **EP 3 276 761 B1**
(45) Veröffentlichungstag und Bekanntmachung des Hinweises auf die Patenterteilung: **17.10.2018**
(21) Anmeldenummer: 17174649.8
(22) Anmeldetag: 07.06.2017
(51) Int. Cl.: H02B 1/052

(54) **BEFESTIGUNGSVORRICHTUNG FÜR EIN IN EINEM GEHÄUSE BEFINDLICHES ELEKTRISCHES BAUTEIL**
FASTENING DEVICE FOR AN ELECTRICAL COMPONENT IN A HOUSING
DISPOSITIF DE FIXATION POUR UN ÉLÉMENT ÉLECTRIQUE DISPOSÉ DANS UN BOÎTIER

(30) Priorität: 27.07.2016 DE 102016113809
(43) Veröffentlichungstag der Anmeldung: 31.01.2018
(73) Patentinhaber: DEHN + SÖHNE GMBH + CO KG, 92318 Neumarkt/Opf (DE)
(72) Erfinder: SCHRAFL, Julius Maria, 92318 Neumarkt (DE)
(74) Vertreter: Kruspig, Volkmar

(56) Entgegenhaltungen:
- DE-A1-102013 114 315
- GB-A- 1 410 578
- US-A1- 2011 070 755

## Beschreibung

Die Erfindung betrifft eine Befestigungsvorrichtung für ein in einem Gehäuse befindliches elektrisches Bauteil, insbesondere Überspannungsschutzgerät, auf einer Trag- oder Hutschiene mit einer Klemmeinrichtung, diese aufweisend einen fixen Greifhaken und einen beweglichen, zum fixen Greifhaken verlagerbaren Klemmschieber sowie einem Kraftumleitungsmechanismus zur Veränderung der relativen Position zwischen Greifhaken und Klemmschieber zwischen einer Offenstellung und einer Befestigungsstellung und mit einem Betätigungselement hierfür gemäß Anspruch 1.

Aus der DE 20 2004 019 381 U1 ist eine Vorrichtung zur Befestigung eines Gerätes an einer Tragschiene vorbekannt. Dem Gerät ist eine hakenförmige Halterung zum Übergreifen eines ersten Randes der Tragschiene sowie ein schwenkbarer Hebel zum Aufrasten hinter einem zweiten Rand der Tragschiene zugeordnet. Die Halterung und der Hebel sind am Gerätegehäuse aus Kunststoff einstückig angeformt. Bei einer Ausführungsform weist der Hebel eine Stirnfläche und eine gegenüber dieser vorspringende Nase auf, die einen zum Eindringen des zweiten Randes der Tragschiene ausreichenden Abstand zwischen der Stirnfläche des Hebels und einer am Gerätegehäuse ausgebildeten Anlagefläche aufrechterhält. Durch eine solche Maßnahme wird das Aufrasten des schwenkbaren Hebels hinter dem zweiten Rand der Tragschiene erleichtert.

Der Hebel kann einen biegsamen Bereich aufweisen, der beim Aufgleiten des Kopfes auf dem zweiten Rand der Tragschiene ein elastisches Ausweichen des Kopfes ermöglicht.

Damit die Rastverbindung des Standes der Technik auch unter beengten Raumverhältnissen leicht gelöst werden kann, ist die Schnappbefestigung dadurch weitergebildet, dass der Hebel einen Fuß aufweist, an dem sich ein entsprechend schlankes Werkzeug, vorzugsweise ein Schraubendreher, ansetzen lässt.

Die DD 157132 A1 offenbart eine Vorrichtung zur Schnellbefestigung von elektrischen Schaltgeräten auf einer Tragschiene. Diesbezüglich soll der Montageablauf der Schnellbefestigungsvorrichtung durch konstruktive Änderungen des Schiebers und dessen Führung im Gehäuse- bzw. Sockelboden verbessert werden. Diesbezüglich weist der Klemmschieber in seinen hochgestellten Abwinkelungen Aussparungen auf, in welche ein Federelement in ungespanntem Zustand eingelegt wird. Das Federelement erhält durch das Einschieben des Klemmschiebers in die Gehäuseführung eine Vorspannung. Der Klemmschieber wird in dieser Lage durch eine am Klemmschieber angeformte, federnde Zunge gehalten, welche sich stirnseitig an der Gehäusewand abstützt.

Der Klemmschieber zur Schnellbefestigung von elektrischen Geräten nach DD 270186 A dient ebenfalls dem Fixieren von elektrischen Geräten im Sinne einer schraubenlosen Schnellmontage auf Tragschienen mit Hutprofil.

Im Sinne einer günstigen Fertigung bei geringem Materialeinsatz besteht der Klemmschieber aus einem U-Profil, dessen hochgestellte Schenkel mit Anlaufschrägen versehen sind. Die Schenkel sind in beide Richtungen als Anschläge ausgebildet und es weist der Klemmschieber ein gewölbtes Profil auf. Im Boden des Klemmschiebers ist eine Federführung angeordnet.

Die Befestigungsvorrichtung zum Befestigen eines Installationsgerätes an einer Tragschiene nach DE 10 2011 115 548 B4 umfasst ein Gehäuse mit einer daran ausgebildeten Halteklaue zum Umfassen eines ersten Schenkels der Tragschiene sowie einen Kipphebel, der eine Klemmklaue aufweist. Die Klemmklaue ist auf einer in das Gehäuse eingesetzten Achse schwenkbar gelagert. Weiterhin ist ein auf den Kipphebel wirkender Federmechanismus vorhanden, der den Kipphebel schwenkt und dessen Klemmklaue auf den zweiten Schenkel der Tragschiene drückt.

Ein in dem Gehäuse angeordneter Anschlag begrenzt die Schwenkbewegung des Kipphebels. Weiterhin ist eine verstellbare Arretiervorrichtung zur Herstellung eines Arretierzustandes vorhanden, bei welchem die Klemmklaue des Kipphebels gegen den zweiten Schenkel der Tragschiene gedrückt ist und ein Abschnitt des Kipphebels an den Anschlag gepresst wird. Der Kipphebel ist also grundsätzlich federbelastet.

Die Klemmvorrichtung zur lösbaren Befestigung eines Gerätegehäuses an einer Wand- oder Bodenfläche angebrachten Profilschiene mit Schienenhalter und Aufnahmebereich für eine Profilschiene nach DE 10 2013 103 544 A1 umfasst zwei Klemmelemente, wobei jeweils ein Klemmelement auf jeder Seite des Aufnahmebereiches angeordnet ist. Weiterhin sind Führungsmittel zur Führung der Klemmelemente gegenüber dem Schienenhalter vorhanden, wobei die Klemmelemente eine Klemmstellung, in der die Profilschiene zangenartig fixiert ist, und eine Öffnungsstellung, an der ein Lösen der Klemmvorrichtung von der Profilschiene möglich ist, einnehmen können. Weiterhin sind Spannmittel pro Klemmelement zur Ausübung einer Kraft auf das jeweilige Klemmelement vorhanden, um es in Richtung des Aufnahmebereiches gegen die Profilschiene zu drücken und in die Klemmstellung zu bringen. Ebenso ist ein Verbindungselement vorhanden, das die Klemmelemente verbindet, und zwar zur Ausübung einer Gegenkraft auf die Klemmelemente, die der durch die Spannmittel erzeugten Kraft entgegenwirkt, um die Klemmelemente von der Klemmstellung in die Öffnungsstellung zu bringen.

Das Öffnen und Schließen erfolgt durch eine Drehbewegung, welche mittels eines Keilschrägenpaares in eine Verschiebebewegung umgewandelt wird.

Aus der DE 20 2015 106 673 U1 ist ein anreihbares Bauelement mit einem für die Aufnahme eines elektrischen oder elektronischen Bauteiles vorgesehenen Gehäuse und mit einer Klemmeinrichtung für die Anbringung an einer Tragschiene vorbekannt.

Die Klemmeinrichtung weist zwei Rast-Greifhaken auf, die in zueinander entgegengesetzter Richtung zwischen einer Offenstellung und einer Befestigungsstellung verlagerbar sind.

Weiterhin ist ein Kraftumlenkungsmechanismus zur Verstellung der Rast-Greifhaken zwischen einer Offenstellung und einer Befestigungsstellung vorhanden. Der Kraftumlenkmechanismus ist mittels eines Betätigungselementes betätigbar, das von einer Außenseite mit einer Stellkraft beaufschlagt werden kann.
Die Rast-Greifhaken begrenzen einen freien Öffnungsabschnitt, der für die lösbare Befestigung an der Tragschiene in der Offenstellung größer und in der Befestigungsstellung geringer ist als eine vorgesehene Tragschiene in Erstreckung.
Der vorbekannte Kraftumlenkungsmechanismus besitzt ein betätigungselementseitiges Auslenkprofil und ein hakenseitiges Verlagerungsprofil, zwischen denen ein Gleitkontakt ausbildbar und das Verlagerungsteil dabei über das Auslenkprofil mit einer Verlagerungskraft beaufschlagbar ist. Zum Lösen der Verbindung zwischen Bauelement und Tragschiene ist ein seitliches Ziehen an entsprechend vorhandenen Betätigungselementen erforderlich. In einer Ausführungsform kommt eine Kulissenführung in Verbindung mit dem Betätigungselement in Betracht, wobei die Kulissenführung zwei Führungsbahnen mit einem gekrümmten Auslenkungsabschnitt und einem linearen Verriegelungsabschnitt besitzt.

Die GB1410578 offenbart eine Befestigungsvorrichtung mit Greifhaken, die als im Gehäuse einsetzbare, leitfähige, metallische Teile ausgebildet sind. Aus dem Vorgenannten ist es Aufgabe der Erfindung, eine weiterentwickelte Befestigungsvorrichtung für ein in einem Gehäuse befindliches elektronisches Bauteil, insbesondere ein Überspannungsschutzgerät, auf einer Trag- oder Hutschiene mittels einer Klemmeinrichtung anzugeben, wobei insbesondere bei angeschlossenen Leitern bezogen auf das elektronische Bauteil auftretende Kräfte aufgenommen und nicht in störender Weise auf die Hutschienenbefestigung einwirken, so dass unter allen Umständen ein definierter Zustand der Erdungskontaktfläche erhalten bleibt. Darüber hinaus soll die zu schaffende Befestigungsvorrichtung für den Einbau elektronischer Bauteile oder elektronischer Geräte geringer Breite geeignet sein. Trotz der geringen Breite eines entsprechenden Gerätes mit diesbezüglichem schmalen Gehäuse soll eine ausreichende blitzstromtragfähige Erdungskontaktausbildung möglich werden und es ist ein stabiler Sitz des entsprechenden Bauteiles auf der Trag- oder Hutschiene zu gewährleisten.

Letztendlich soll das Befestigen des Gerätes auf der Trag- oder Hutschiene aber auch ein Lösen von der Trag- oder Hutschiene, in einfacher und schneller Weise erfolgen können. Bei auf einer Trag- oder Hutschiene aneinander gereihten Bauteilen soll das Fixieren und Entnehmen der entsprechenden Bauteile nach oben störungsfrei erfolgen können.

Die Lösung der Aufgabe der Erfindung erfolgt durch eine Befestigungsvorrichtung gemäß der Merkmalskombination nach Patentanspruch 1, wobei die Unteransprüche mindestens zweckmäßige Ausgestaltungen und Weiterbildungen umfassen.

Es wird demnach von einer Befestigungsvorrichtung für ein in einem Gehäuse befindliches elektrisches Bauteil, insbesondere ein Überspannungsschutzgerät ausgegangen. Die Befestigungsvorrichtung ist so auszubilden, dass ein Fixieren des entsprechenden elektrischen Bauteils auf einer Trag- oder Hutschiene mittels Klemmeinrichtung möglich wird.

Die Klemmeinrichtung weist dabei einen fixen Greifhaken und einen beweglichen, zum fixen Greifhaken verlagerbaren Klemmschieber auf. Ebenso ist ein Kraftumleitungsmechanismus zur Veränderung der relativen Position zwischen Greifhaken und Klemmschieber zwischen einer Offenstellung und einer Befestigungsstellung vorhanden. Darüber hinaus ist ein Betätigungselement hierfür vorgesehen.

Mit Hilfe der Befestigungsvorrichtung soll nicht nur das entsprechende elektrische oder elektronische Bauteil auf der Trag- oder Hutschiene fixiert werden, sondern es soll darüber hinaus zur üblicherweise metallischen Hutschiene ein blitzstromtragfähiger Erdungskontakt herstellbar sein. Die Befestigungsvorrichtung ist insbesondere für solche elektronischen Bauteile oder Geräte geeignet, die eine geringe Breite, zum Beispiel 6 mm, besitzen.

Der Greifhaken der erfindungsgemäßen Befestigungsvorrichtung ist als im Gehäuse bzw. im elektronischen Bauteil selbst einsetzbares oder einlegbares, leitfähiges, metallisches Teil ausgebildet.

Der Greifhaken weist einen Kopfabschnitt auf, welcher im Befestigungszustand einen ersten Schenkelabschnitt der Trag- oder Hutschiene unter Bildung elektrischer Kontaktflächen mechanisch umfasst.

Der erfindungsgemäße Klemmschieber ist im Gehäuse bzw. im elektronischen Bauteil mittels Führung verschiebebeweglich gelagert.

Das freie Ende des Klemmschiebers unter- und übergreift im Befestigungszustand einen zweiten, den ersten Schenkelabschnitt der Trag- oder Hutschiene gegenüberliegenden Abschnitt und übt eine Klemmkraft aus. Am Klemmschieber ist darüber hinaus eine Aufnahme für einen Betätigungshebel vorgesehen, wobei ein erstes Ende des Betätigungshebels in die Aufnahme eingreift und ein zweites Ende des Betätigungshebels das eigentliche Betätigungselement darstellt.

Am Gehäuse bzw. am elektronischen Bauteil ist ein Anschlag für den Betätigungshebel vorgesehen. Dieser Anschlag bildet einen Drehpunkt, derart, dass das erste Ende des Betätigungshebels den Klemmschieber von der Offenstellung in die Befestigungsstellung und umgekehrt verschiebt, wobei in der Befestigungsstellung der Betätigungshebel von einem Spannbügel lagefixiert ist.

Der Spannbügel weist in seiner Ausgestaltung der Erfindung ein erstes Ende auf, welches verschwenkbeweglich mit dem Greifhaken verbunden ist, wobei ein zweites Ende des Spannbügels bevorzugt als Öse oder ösenartig ausgebildet ist, wobei durch die Öse der Betätigungshebel beweglich geführt und aufgenommen wird.

In einer Ausführungsform der Erfindung weist der Spannbügel bevorzugt im Bereich des zweiten Endes eine federelastische Abwinkelung oder Abknickung auf. Durch diese federelastische Abwinkelung besteht die Möglichkeit, Toleranzen aufgrund veränderter Hutschienenbreiten auszugleichen.

In der Befestigungsstellung liegt mindestens das zweite Ende des Betätigungshebels unterhalb der vom Greifhaken und dem Klemmschieber gebildeten Ebene.

Zur Signalisierung des Zustandes der Befestigungsvorrichtung im Sinne von offen oder verriegelt kann der Klemmschieber einen Fortsatz aufweisen, wobei in der Offenstellung der Fortsatz aus dem Gehäuse bzw. einer entsprechenden Oberflächenseite des elektronischen Bauteiles hervorsteht.

Neben der optisch erkennbaren aber auch erfühlbaren Position des Betätigungselementes ist also durch den erwähnten Fortsatz eine weitere Signalisierungsmöglichkeit gegeben, die auch elektrisch überwacht bzw. ausgewertet werden kann.

Das Fixieren der Befestigungsstellung erfolgt derart, dass der Spannbügel in Verbindung mit dem Betätigungshebel, dem Anschlag und der Aufnahme für das erste Ende des Betätigungshebels eine Übertotpunktspannanordnung bildet.

Zum Überführen in die Offenstellung wird unter Krafteinwirkung auf das Betätigungselement die Übertotpunktposition aufgehoben und der Klemmschieber vom entsprechenden Schenkelabschnitt der Trag- oder Hutschiene weg bewegt.

In einer Weiterbildung der Erfindung sind die mit den jeweiligen Schenkelabschnitten der Trag- oder Hutschiene in Kontakt kommenden Bereiche des Greifhakens und/oder des Klemmschiebers keilflächenförmig ausgebildet oder weisen derartige Keilflächen auf. Eine diesbezügliche Greiffläche im Sinne einer konischen Aufnahme für die Schenkelabschnitte der Trag- oder Hutschienen gestatten das Befestigen auf Schienen unterschiedlicher Konfiguration, insbesondere von Schienen mit unterschiedlicher Dicke im Bereich der genannten Schenkelabschnitte.

Die Erfindung soll nachstehend anhand eines Ausführungsbeispieles sowie unter Zuhilfenahme von Figuren näher erläutert werden.

Hierbei zeigen:
- Fig. 1-3: Seitenansichten auf die erfindungsgemäße Befestigungsvorrichtung mit Spannbügeln und Übertotpunktanordnung, wobei Fig. 1 den geschlossenen und gespannten Zustand, Fig. 2 eine Mittelstellung und Fig. 3 eine Stellung in geöffnetem Zustand illustriert;
- Fig. 4-6: perspektivische Darstellungen mit der übersichtlichkeitshalber teilweise weggebrochenem Gehäuse ebenfalls in der Abfolge geschlossener/gespannter Zustand (Fig. 4), Mittelstellung (Fig. 5) und geöffnetem Zustand (Fig. 6).

Die Befestigungsvorrichtung gemäß Ausführungsbeispiel dient dem Fixieren elektronischer Geräte oder Bauteile an Hutschienen 17, beispielsweise Hutschienen der Ausführungsform TH35 mit einer Höhe von 7,5 Millimetern oder 15 Millimetern.

Die Befestigungsvorrichtung mit ihren wesentlichen Elementen kann einerseits im Boden eines Gehäuses 2 angeordnet werden, aber auch Bestandteil eines zu fixierenden elektronischen und elektrischen Bauteiles sein.

Insbesondere und bevorzugt kommt die Befestigungsvorrichtung bei dem Fixieren von Überspannungsschutzgeräten auf Hutschienen zur Anwendung.

Diesbezüglich gelingt nicht nur eine sichere mechanische Befestigung, sondern es kann ein blitzstromtragfähiger Erdungskontakt realisiert werden, wobei die Komponenten Greifhaken, Klemmschieber, Spannbügel und Betätigungshebel aus einem metallischen, leitfähigen Material bestehen.

Die bei der Befestigungsvorrichtung zur Anwendung kommende Klemmeinrichtung weist einen fixen Greifhaken 4 und einen beweglichen, zum fixen Greifhaken 4, verlagerbaren Klemmschieber 13 auf. Darüber hinaus ist ein Kraftumleitungsmechanismus zur Veränderung der relativen Position zwischen Greifhaken 4 und Klemmschieber 13 zwischen einer Offenstellung und einer Befestigungsstellung vorgesehen nebst entsprechenden Betätigungselementen 9 hierfür.

Der Greifhaken 4 ist gemäß den Abbildungen im Gehäuse 2 eingesetzt und als leitfähiges metallisches Teil ausgebildet, wobei der Greifhaken 4 einen Kopfabschnitt 41 besitzt, welcher im Befestigungszustand einen ersten Schenkelabschnitt 171 der Trag- oder Hutschiene 17 unter Bildung elektrischer Kontaktflächen 5 und 6 mechanisch umfasst.

Der Klemmschieber 13 ist im Gehäuse 2 mittels Führung verschiebebeweglich gelagert. Ein freies Ende des Klemmschiebers 13 unter- und übergreift im Befestigungszustand einen zweiten, dem ersten Schenkelabschnitt 171 der Trag- oder Hutschiene 17 gegenüberliegenden Abschnitt 172.

Hierbei wird eine entsprechende Klemmkraft ausgeübt. Am Klemmschieber 13 ist weiterhin eine Aufnahme für einen Betätigungshebel unter Bildung eines Drehpunktes 11 vorgesehen, wobei ein erstes Ende des Betätigungshebels in die Aufnahme eingreift und ein zweites Ende des Betätigungshebels in das Betätigungselement 9 übergeht oder dieses bildet.

Im Bewegungsbereich des Betätigungselementes 9 ist am Gehäuse 2 ein Anschlag 1 vorgesehen, welcher einen weiteren Drehpunkt 15 darstellt, derart, dass das erste Ende des Betätigungshebels 9 den Klemmschieber 13 von der Offenstellung in die Befestigungsstellung und umgekehrt verschiebt, wobei in der Befestigungsstellung der Betätigungshebel 9 von einem Spannbügel 16 lagefixiert ist.

Der Spannbügel 16 weist ein erstes Ende auf, welches verschwenkbeweglich mit dem Greifhaken 4 verbunden ist, wobei ein zweites Ende des Spannbügels 16 als Öse 161 ausgebildet ist, durch welche der Betätigungshebel 9 geführt wird.

Weiterhin besitzt der Spannbügel 16 im Bereich seines zweiten Endes eine federelastische Abwinkelung 10 zum Toleranzausgleich bezogen auf die Abmessungen der jeweiligen Trag- oder Hutschiene 17.

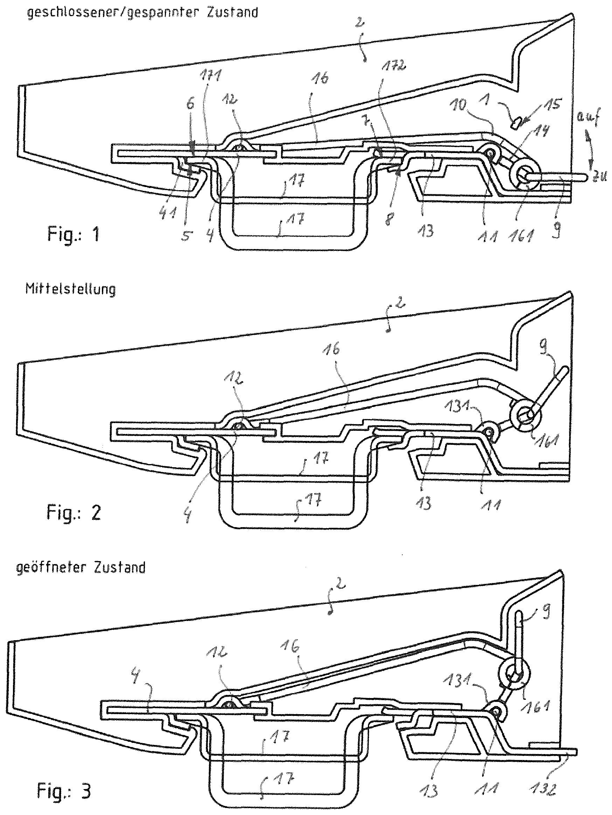

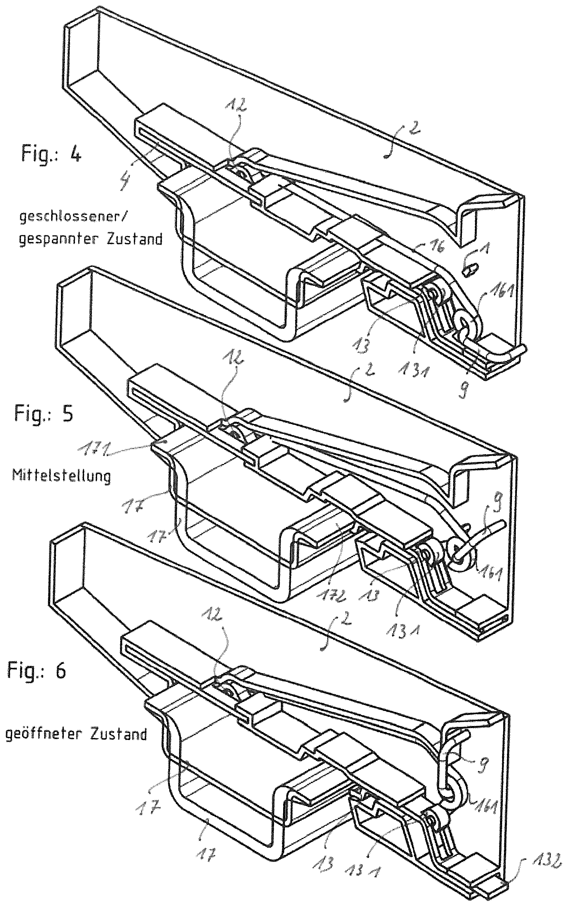

Wie aus den Fig. 1 und 4 nachvollziehbar, liegt in der Befestigungsstellung mindestens das zweite Ende des Betätigungshebels 9 unterhalb der vom Greifhaken 4 und dem Klemmschieber 13 gebildeten Ebene.

Der Klemmschieber 13 kann in einer Ausgestaltung einen Fortsatz 132 aufweisen, welcher zur Signalisierung des Verriegelungszustandes geeignet ist, wobei in der Offenstellung der Fortsatz 132 aus dem Gehäuse 2 hervorsteht.

Der Wirkungsmechanismus zum Verriegeln der Befestigungsvorrichtung ist so zu verstehen, dass der Spannbügel 16 in Verbindung mit dem Betätigungshebel 9, dem Anschlag 1 und der Aufnahme für das erste Ende des Betätigungshebels 9 eine Übertotpunktspannanordnung in Befestigungsstellung einnimmt.

In der Befestigungsstellung liegen alle Kontaktflächen 5, 6, 7 und 8 an der entsprechenden Hutschiene und deren Schenkelabschnitten an.

Die Aufnahme für das eine Ende des Spannbügels 16 im Bereich des Greifhakens 4 ist bevorzugt als Drehpunkt 12 realisierbar.

Die Figuren machen auch deutlich, dass die mit den jeweiligen Schenkelabschnitten der Trag- oder Hutschiene 17 in Kontakt kommenden Bereiche des Greifhakens 4 und/oder des Klemmschiebers 13 als Keilflächen ausgebildet werden können, um die elektrische und mechanische Kontaktierung jeweils bezogen auf die vorliegenden Hut- oder Tragschienen 17 zu optimieren.

## Patentansprüche

1. Befestigungsvorrichtung für ein in einem Gehäuse (2) befindliches elektrisches Bauteil, insbesondere ein Überspannungsschutzgerät, auf einer Trag- oder Hutschiene (17) mit einer Klemmeinrichtung, diese aufweisend einen fixen Greifhaken (4) und einen beweglichen, zum fixen Greifhaken (4) verlagerbaren Klemmschieber (13) sowie einem Kraftumleitungsmechanismus zur Veränderung der relativen Position zwischen Greifhaken (4) und Klemmschieber (13) zwischen einer Offenstellung und einer Befestigungsstellung und mit einem Befestigungselement (9) hierfür, wobei der Greifhaken (4) als im Gehäuse (2) einleg- oder einsetzbares, leitfähiges metallisches Teil ausgebildet ist, wobei der Greifhaken (4) einen Kopfabschnitt (41) besitzt, welcher im Befestigungszustand einen ersten Schenkelabschnitt (171) der Trag- oder Hutschiene (17) unter Bildung elektrischer Kontakte (5; 6) mechanisch umfasst, der Klemmschieber (13) im Gehäuse (2) mittels Führung verschiebebeweglich gelagert ist und ein freies Ende des Klemmschiebers (13) im Befestigungszustand einen zweiten, dem ersten Schenkelabschnitt (171) der Trag- oder Hutschiene (17) gegenüberliegenden Abschnitt (172) unter- und übergreift und einen elektrischen Kontakt (7; 8) bildet und eine Klemmkraft ausübt; **dadurch gekennzeichnet, dass** am Klemmschieber (13) eine Aufnahme (131) für einen Betätigungshebel vorgesehen ist, wobei ein erstes Ende des Betätigungshebels (9) in die Aufnahme (131) eingreift und ein zweites Ende des Betätigungshebels (9) das Betätigungselement darstellt, am Gehäuse (2) ein Anschlag (1) für den Betätigungshebel (9) vorgesehen ist, welcher einen Drehpunkt (15) bildet, derart, dass das erste Ende des Betätigungshebels (9) den Klemmschieber (13) von der Offenstellung in die Befestigungsstellung und umgekehrt verschiebt, wobei in der Befestigungsstellung der Betätigungshebel (9) von einem Spannbügel (16) lagefixiert ist.

2. Befestigungsvorrichtung nach Anspruch 1,
**dadurch gekennzeichnet, dass**
der Spannbügel (16) ein erstes Ende aufweist, welches verschwenkbeweglich (12) mit dem Greifhaken (4) verbunden ist, wobei ein zweites Ende des Spannbügels (16) als Öse (161) ausgebildet ist, durch welche der Betätigungshebel (9) geführt wird.

3. Befestigungsvorrichtung nach Anspruch 2,
**dadurch gekennzeichnet, dass**
der Spannbügel (16) im Bereich des zweiten Endes eine federelastische Abwinkelung (10) oder einen federelastischen Abschnitt aufweist.

4. Befestigungsvorrichtung nach einem der vorangegangenen Ansprüche,
**dadurch gekennzeichnet, dass**
in der Befestigungsstellung mindestens das zweite Ende des Betätigungshebels (9) unterhalb der vom Greifhaken (4) und dem Klemmschieber (13) gebildeten Flächenebene liegt.

5. Befestigungsvorrichtung nach einem der vorangegangenen Ansprüche,
**dadurch gekennzeichnet, dass**
der Klemmschieber (13) einen Fortsatz (132) zur Signalisierung des Verriegelungszustandes aufweist, wobei in der Offenstellung der Fortsatz (132) aus dem Gehäuse (2) hervorsteht.

6. Befestigungsvorrichtung nach einem der vorangegangenen Ansprüche,
**dadurch gekennzeichnet, dass**
der Spannbügel (16) in Verbindung mit dem Betätigungshebel (9), dem Anschlag (1) und der Aufnahme (131) für das erste Ende des Betätigungshebels (9) eine Übertotpunkt-Spannanordnung in der Befestigungsstellung einnimmt.

7. Befestigungsvorrichtung nach einem der vorangegangenen Ansprüche,
**dadurch gekennzeichnet, dass**
die mit den jeweiligen Schenkelabschnitten der Trag- oder Hutschienen (17) in Kontakt kommenden Bereiche des Greifhakens (4) und/oder des Klemmschiebers (13) Keilflächen aufweisen oder als Keilflächen ausgebildet sind.

## Claims

1. Fastening device for an electrical component, in particular an overvoltage protection device, located in a housing (2) on a supporting or top-hat rail (17) having a clamping device, comprising a fixed gripping hook (4) and a movable clamping slide (13) displaceable to the fixed gripping hook (4) and a force diversion mechanism for changing the relative position between gripping hook (4) and clamping slide (13) between an open position and a fastening position as well as a fastening element (9) for it, wherein the gripping hook (4) is adapted as a conductive metallic part which can be placed or inserted in the housing (2), the gripping hook (4) having a head section (41) which in the fastening state mechanically comprises a first leg section (171) of the support or top-hat rail (17) forming electrical contacts (5; 6), the clamping slide (13) is displaceably mounted in the housing (2) by means of a guide and a free end of the clamping slide (13) engages in the fastening state below and over a second section (172) opposite the first leg section (171) of the support or top-hat rail (17) and forms an electrical contact (7; 8) and exerts a clamping force;
**characterized in that**
a receptacle (131) for an actuating lever is provided on the clamping slide (13), a first end of the actuating lever (9) engaging in the receptacle (131) and a second end of the actuating lever (9) representing the actuating element, a stop (1) for the actuating lever (9) being provided on the housing (2), which forms a fulcrum (15) such that the first end of the actuating lever (9) moves the clamping slide (13) from the open position into the fastening position and vice versa, the actuating lever (9) being fixed in position by a clamping bracket (16) in the fastening position.

2. Fastening device according to Claim 1,
**characterized in that**
the clamping bracket (16) comprises a first end, which is pivotably (12) connected to the gripping hook (4), a second end of the clamping bracket (16) being embodied as an eye (161) through which the actuating lever (9) is guided.

3. Fastening device according to Claim 2,
**characterized in that**
the clamping bracket (16) comprises a resilient bending (10) or a resilient portion in the region of the second end.

4. Fastening device according to one of the preceding claims, **characterized in that**
in the fastening position at least the second end of the actuating lever (9) is located below the surface plane formed by the gripping hook (4) and the clamping slide (13).

5. Fastening device according to one of the preceding claims, **characterized in that**
the clamping slide (13) comprises an extension (132) for signaling the locking state, wherein the extension (132) protrudes out of the housing (2) in the open position.

6. Fastening device according to one of the preceding claims, **characterized in that**
the clamping bracket (16) in conjunction with the actuating lever (9), the stop (1) and the receptacle (131) for the first end of the actuating lever (9), adopts an above dead center clamping arrangement in the fastening position.

7. Fastening device according to one of the preceding claims, **characterized in that**
the parts of the gripping hook (4) and/or the clamping slide (13) that come into contact with the respective leg sections of the supporting or top-hat rails (17) comprise wedge faces or are formed as wedge faces.

## Revendications

1. Dispositif de fixation pour un composant électrique se trouvant dans un boîtier (2), en particulier un appareil de protection contre les surtensions sur un rail support ou un rail de type oméga (Ω) (17) avec un dispositif de serrage, celui-ci présentant un crochet de préhension (4) fixe et une coulisse de serrage (13) mobile, déplaçable vers le crochet de préhension (4) fixe, ainsi qu'un mécanisme de déviation de forces pour modifier la position relative entre le crochet de préhension (4) et la coulisse de serrage (13) entre une position d'ouverture et une position de fixation et avec un élément de fixation (9) à cet effet,
le crochet de préhension (4) étant réalisé sous forme de pièce métallique conductrice susceptible d'être insérée ou mise en place dans le boîtier (2), le crochet de préhension (4) possédant du point de vue mécanique un tronçon de tête (41) qui comprend, à l'état de fixation, un premier tronçon de branche (171) du rail support ou du rail Ω (17) en formant des contacts électriques (5 ; 6), la coulisse de serrage (13) étant montée mobile en translation dans le boîtier (2) au moyen d'un guidage, et une extrémité libre de la coulisse de serrage (13), à l'état de fixation, vient en prise par-dessus et par-dessous un deuxième tronçon (172) opposé au premier tronçon de branche (171) du rail support ou du rail Ω (17) et forme un contact (7 ; 8) électrique et exerce une force de serrage ;
**caractérisé en ce que** sur la coulisse de serrage (13) est prévu un logement (131) pour un levier d'actionnement, une première extrémité du levier d'actionnement (9) s'engageant dans le logement (131), et une deuxième extrémité du levier d'actionnement (9) constituant l'élément d'actionnement, sur le boîtier (2) étant prévue une butée (1) pour le levier d'actionnement (9) qui forme un point de rotation (15) de telle sorte que la première extrémité du levier d'actionnement (9) déplace la coulisse de serrage (13) depuis la position d'ouverture jusque dans la position de fixation et inversement, le levier d'actionnement (9) étant immobilisé dans la position de fixation par un étrier de tension (16).

2. Dispositif de fixation selon la revendication 1,
**caractérisé en ce que**
l'étrier de tension (16) présente une première extrémité qui est reliée de manière mobile par pivotement (12) avec le crochet de préhension (4), une deuxième extrémité de l'étrier de tension (16) étant réalisée sous forme d'oeillet (161) à travers lequel le levier d'actionnement (9) est guidé.

3. Dispositif de fixation selon la revendication 2,
**caractérisé en ce que**
l'étrier de tension (16) présente dans la zone de la deuxième extrémité un coudage (10) élastique ou un tronçon élastique à la manière d'un ressort.

4. Dispositif de fixation selon l'une des revendications précédentes,
**caractérisé en ce que**
dans la position de fixation, au moins la deuxième extrémité du levier d'actionnement (9) se trouve au-dessous de la surface plane formée par le crochet de préhension (4) et la coulisse de serrage (13).

5. Dispositif de fixation selon l'une des revendications précédentes,
**caractérisé en ce que**
la coulisse de serrage (13) présente un prolongement (132) pour signaliser l'état de verrouillage, le prolongement (132) faisant saillie hors du boîtier (2) dans la position d'ouverture.

6. Dispositif de fixation selon l'une des revendications précédentes,
**caractérisé en ce que**
l'étrier de tension (16), en liaison avec le levier d'actionnement (9), la butée (1) et le logement (131) pour la première extrémité du levier d'actionnement (9), constitue un agencement de tensionnement à dépassement de point mort dans la position de fixation.

7. Dispositif de fixation selon l'une des revendications précédentes,
**caractérisé en ce que**
les zones du crochet de préhension (4) et/ou de la coulisse de serrage (13) venant en contact avec les tronçons de branche respectifs des rails supports ou des rails Ω (17) présentent des surfaces en coin ou sont réalisées sous forme de surfaces en coin.
